# EUROPEAN PATENT APPLICATION

(11) **EP 4 819 357 A1**
(43) Date of publication of application: **07.10.2026**
(21) Application number: 25866476.2
(22) Date of filing: 27.08.2025
(51) Int. Cl.: H01M 50/502, H01M 50/519, H01M 50/569, H01M 50/211

(54) **BUSBAR FRAME ASSEMBLY AND BATTERY ASSEMBLY INCLUDING SAME**

(30) Priority: 12.09.2024 KR 20240124387
(71) Applicant: LG Energy Solution, Ltd., Seoul 07335 (KR)
(72) Inventor: JANG, Byung Do, Daejeon 34122 (KR)
(74) Representative: BCKIP Part mbB
(86) International application number: PCT/KR2025/013110
(87) International publication number: WO 2026/059175

(57) **Abstract**

A busbar frame assembly according to an embodiment of the present disclosure comprises a busbar connected to a plurality of battery cells; a printed circuit board (PCB) connected to the busbar for voltage sensing of the battery cells; a first reinforcing plate and a second reinforcing plate that are disposed in mutually different regions of the printed circuit board; and a busbar frame on which the busbar is disposed.

## Description

### TECHNICAL FIELD

### Cross-Reference to Related Application(s)

This application claims priority to and the benefit of Korean Patent Application No. 10-2024-0124387, filed on September 12, 2024, the entire contents of which are incorporated herein by reference.

The present disclosure relates to a busbar frame assembly and a battery assembly including the same, and more particularly, to a busbar frame assembly having a flattening structure of a printed circuit board (PCB) through the separation of a reinforcing plate, and a battery assembly including the same.

### BACKGROUND

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the necessity for development of the secondary battery is increasing.

Currently commercialized secondary batteries include a nickel cadmium battery, a nickel hydrogen battery, a nickel zinc battery, a lithium secondary battery, and the like. Among these batteries, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery mainly uses lithium-based oxide and a carbon material as a positive electrode active material and a negative electrode active material, respectively. The lithium secondary battery includes an electrode assembly in which a positive electrode plate and a negative electrode plate respectively coated with the positive electrode active material and the negative electrode active material are disposed with a separator being interposed between them, and a battery case which seals and houses the electrode assembly together with an electrolyte.

Generally, the lithium secondary battery may be classified based on the shape of the exterior material into a can-type secondary battery in which the electrode assembly is embedded in a metal can, and a pouch-type secondary battery in which the electrode assembly is embedded in a pouch of an aluminum laminate sheet.

In the case of a secondary battery used for small-sized devices, two to three battery cells are disposed, but in the case of a secondary battery used for a middle or large-sized device such as an automobile, a battery module in which a large number of battery cells are electrically connected is used. In such a battery module, a large number of battery cells are connected to each other in series or in parallel to form a battery cell stack, thereby improving capacity and output. One or more battery modules may be mounted together with various control and protection systems such as a BDU(Battery Disconnect Unit), a BMS (Battery Management System) and a cooling system to form a battery pack.

Meanwhile, a busbar connected to the battery module is provided inside the battery pack. A conventional busbar is a rod-shaped metal member that extend along a longitudinal direction. Both ends of the busbar may be formed with through-holes for connection to the terminal busbar of the battery module. This busbar takes charge of HV (High Voltage) connections in the battery pack. The HV connection refers to a connection that serves as a power source to supply power, and the busbar guides the electrical connection of the battery module and generally includes a metal material with excellent electrical conductivity. In one example, the busbar may include a copper (Cu) material.

### [DETAILED DESCRIPTION OF THE INVENTION]

### [Technical Problem]

It is an object of the present disclosure to provide a busbar frame assembly that resolves the issues of quality risks and increased production costs caused by the bending process of conventional printed circuit boards, and specifically, a busbar frame assembly that maintains the flatness of the printed circuit board through separation arrangement of a reinforcing plate, eliminates unnecessary bending processes to reduce production costs, and reduces quality issues such as cracks and tears in the printed circuit board, and a battery assembly including the same.

However, the technical objects to be solved by embodiments of the present disclosure are not limited to the above-mentioned objects, and can be variously expanded within the scope of the technical idea included in the present disclosure.

### [Technical Solution]

According to an aspect of the present disclosure, provided is a busbar frame assembly comprising: a busbar connected to a plurality of battery cells; a printed circuit board (PCB) connected to the busbar for voltage sensing of the battery cells; a first reinforcing plate and a second reinforcing plate that are disposed in mutually different regions of the printed circuit board; and a busbar frame on which the busbar is disposed.

In an embodiment, the second reinforcing plate may be separated from the first reinforcing plate, and located on a plane surface different from one surface of the first reinforcing plate.

In an embodiment, the second reinforcing plate may be located on a place surface equal to one surface of the busbar.

In an embodiment, the printed circuit board may be tightly adhered to the first reinforcing plate and the second reinforcing plate.

In an embodiment, the printed circuit board may not be bent, except for a region between the first reinforcing plate and the second reinforcing plate.

In an embodiment, a region connected to a module connector in the printed circuit board may be tightly adhered to the first reinforcing plate.

In an embodiment, the second reinforcing plate may be disposed closer to the busbar than the first reinforcing plate.

In an embodiment, the first reinforcing plate and the second reinforcing plate may be disposed on one surface of the busbar frame.

In an embodiment, the first reinforcing plate, the second reinforcing plate, and the printed circuit board may be fixed to the busbar frame by thermal fusion.

According to another aspect of the present disclosure, provided is a battery assembly comprising the busbar frame assembly.

### [Advantageous Effects]

According to embodiments of the present disclosure, the bending process used in conventional printed circuit boards is eliminated through a separation arrangement of the reinforcing plate and a flattening structure of the printed circuit board, thereby reducing production costs. Further, it is possible to secure the structural stability of the printed circuit board and reduce quality issues such as cracks and tears in the printed circuit board. Thus, it is possible to improve the reliability of the battery assembly and maintain the battery cell voltage sensing accuracy.

The effects of the present disclosure are not limited to the effects mentioned above, and additional other effects not mentioned above will be clearly understood from the description of the appended claims by those skilled in the art.

### [BRIEF DESCRIPTION OF THE DRAWINGS]

FIG. 1 is a perspective view showing a busbar frame assembly according to an embodiment of the present disclosure.
FIG. 2 is a plan view showing the busbar frame assembly of FIG. 1.
FIG. 3 is a plan view showing a state of the busbar frame assembly of FIG. 1 viewed from an angle different from that of FIG. 2.
FIG. 4 is a cross-sectional view showing a cross section taken along the cutting line A-A' of FIG. 2.
FIG. 5 is a cross-sectional view showing a cross section taken along the cutting line B-B' of FIG. 2.
FIG. 6 is a perspective view showing a printed circuit board according to an embodiment of the present disclosure.
FIG. 7 is a cross-sectional view showing a cross section taken along the cutting line C-C' of FIG. 2.

### [DETAILED DESCRIPTION OF THE EMBODIMENTS]

Hereinafter, with reference to the accompanying drawings, various embodiments of the present disclosure will be described in detail to the extent that one of ordinary skill in the art can easily practice the claimed invention. The present disclosure may be implemented in various different forms, and is not limited to the embodiments described herein.

In order to clearly describe the present disclosure, descriptions of parts unrelated to the description of the present disclosure will be omitted, and the same or similar components throughout the description will be denoted with the same reference numerals.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of a part and a region are shown to be exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

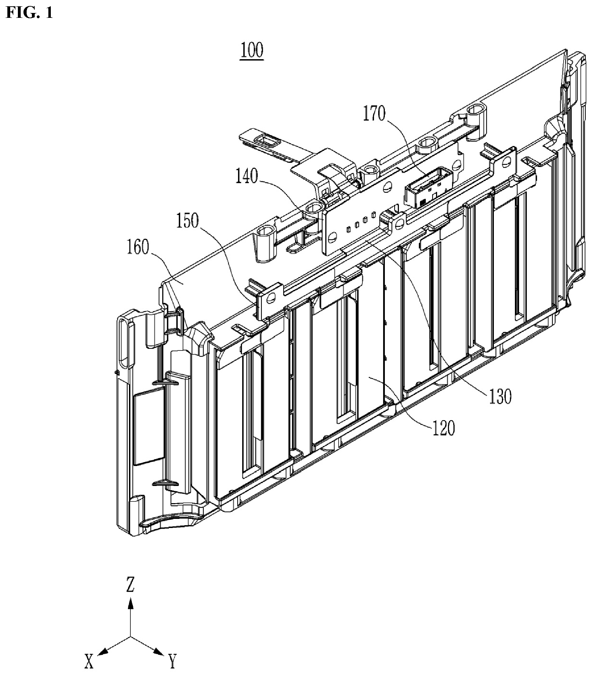

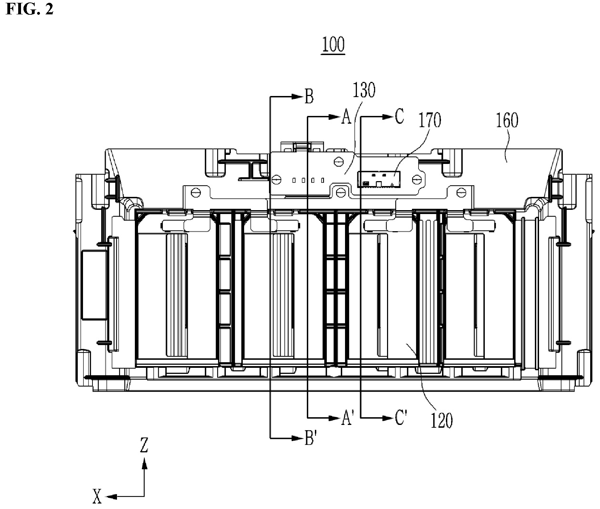

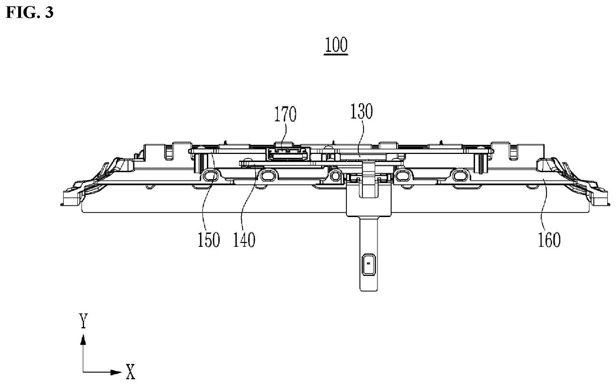

FIG. 1 is a perspective view showing a busbar frame assembly according to an embodiment of the present disclosure. FIG. 2 is a plan view showing the busbar frame assembly of FIG. 1. FIG. 3 is a plan view showing a state of the busbar frame assembly of FIG. 1 viewed from an angle different from that of FIG. 2.

Referring to FIGS. 1 to 3, a busbar frame assembly 100 according to an embodiment of the present disclosure comprises a busbar 120 connected to a plurality of battery cells; a printed circuit board (PCB) 130 connected to the busbar 120 for voltage sensing of the battery cells; a first reinforcing plate 140 and a second reinforcing plate 150 that are disposed in mutually different regions of the printed circuit board 130; and a busbar frame 160 on which the busbar 120 is disposed.

The busbar 120 according to the present embodiment may be electrically connected to the battery cells. The busbar 120s has a configuration that guides electrical connections between battery cells within the battery assembly or guides electrical connections within the battery assembly, and its shape or material is not limited as long as it includes a metal material with excellent electrical conductivity. In one example, the battery cell may include an electrode lead or electrode terminal that is connected to the electrode assembly therein and partially exposed to the outside. While the busbar 120 is connected to such an electrode lead or electrode terminal, it may be electrically connected to the battery cell.

According to the present embodiment, the printed circuit board 130 is configured to sense voltage data or thermal data of the battery cells. In one example, the printed circuit board 130 may be connected to the electrode lead or electrode terminal of the battery cells, or to the busbar 120. Thus, the printed circuit board 130 may sense voltage data of each battery cell and transmit this data to an external BMS (Battery Management System). The BMS may control the operation of the battery assembly based on the voltage data from the battery cells included in the battery assembly.

According to the present embodiment, a busbar 120 may be mounted on the busbar frame 160. The busbar frame 160 may include an electrically insulating material, and thus prevent the busbar 120 from contacting other parts of the battery cells and causing a short circuit. The busbar frame 160 may perform a function to fix the busbar 120 and stably maintain the bonding with the printed circuit board 130.

According to the present embodiment, the first reinforcing plate 140 and the second reinforcing plate 150 for supporting the printed circuit board 130 may be disposed in mutually different regions of the printed circuit board 130. The first reinforcing plate 140 and the second reinforcing plate 150 may be designed to minimize mechanical deformation of the printed circuit board 130 in a process of connecting the printed circuit board 130 to the busbar 120. Thus, the mechanical stability of the printed circuit board (130) can be ensured, and voltage sensing between battery cells may be accurately performed. That is, the bonding between the busbar 120 and the printed circuit board 130 is stably performed, thereby enabling accurate transmission of electrical signals.

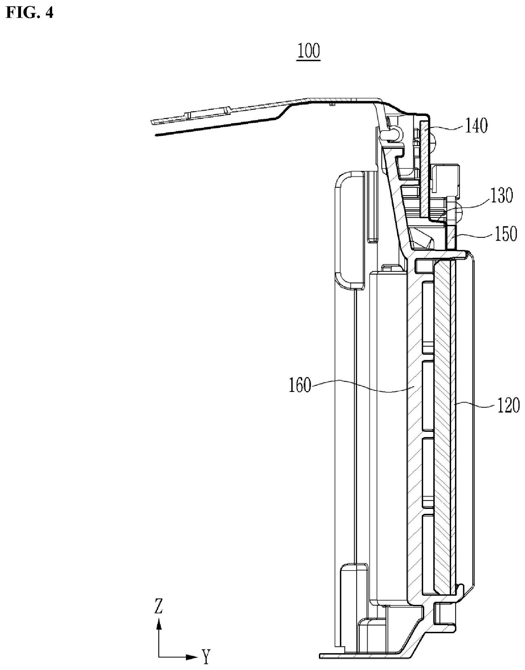

FIG. 4 is a cross-sectional view showing a cross section taken along the cutting line A-A' of FIG. 2.

Referring to FIGS. 1 to 4, the second reinforcing plate 150 may be separated from the first reinforcing plate 140 and located on a plane surface different from one surface of the first reinforcing plate 140. In one example, in FIG. 4, the first reinforcing plate 140 and the second reinforcing plate 150 may be respectively located on imaginary plane surfaces that are differently located from each other along the Y-axis direction.

Specifically, the first reinforcing plate 140 is located on an upper part of the printed circuit board 30 to support the main circuit region of the printed circuit board 130, and the second reinforcing plate 150 is located on a lower part or side surface of the printed circuit board 130 to support the connection site between the printed circuit board 130 and the busbar 120. The second reinforcing plate 150 may perform a function to disperse mechanical stress that may occur when the printed circuit board 130 is connected to the busbar 120, and to maintain the flatness of the printed circuit board 130. This arrangement allows the printed circuit board 130 to be accurately fixed to the busbar 120, and thus contribute to ensuring the stability of the electrical connection. The first reinforcing plate 140 and the second reinforcing plate 150 may be located at different heights and positions, thereby preventing deformation that may occur in specific regions of the printed circuit board 130. Further, electrical contact failures may be reduced and the battery cell voltage sensing accuracy may be improved.

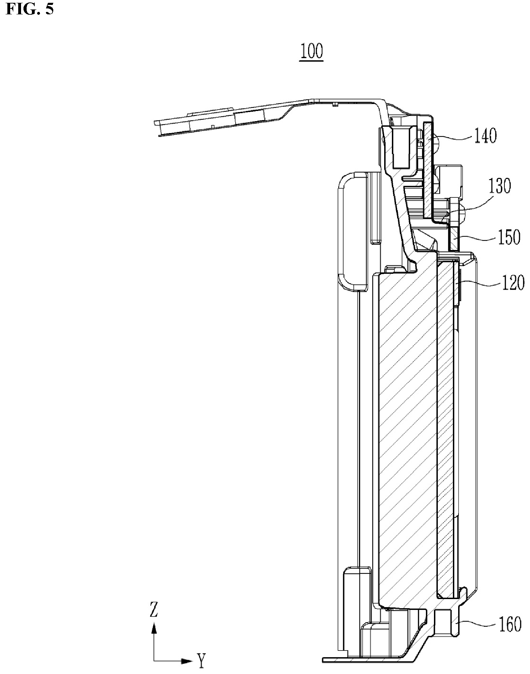

FIG. 5 is a cross-sectional view showing a cross section taken along the cutting line B-B' of FIG. 2.

Referring to FIGS. 1 to 3 and 5, the second reinforcing plate 150 may be located on a plane surface equal to one surface of the busbar 120.

The second reinforcing plate 150 according to the present embodiment is adjusted to match the height of the busbar 120, so that the printed circuit board 130 may be fixed to be flat without bending. Thus, when the printed circuit board 130 is adhered to the busbar 120, the contact surface between the printed circuit board 130 and the busbar 120 can be maintained evenly. Further, mechanical stress that may occur when the printed circuit board 130 is connected to the busbar 120 may be minimized, and the electrical connection between the printed circuit board 130 and the busbar 120 may be maintained stably.

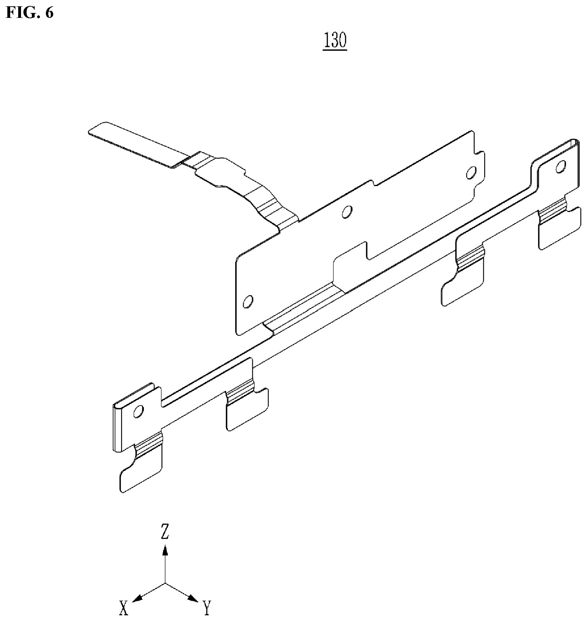

FIG. 6 is a perspective view showing a printed circuit board 130 according to an embodiment of the present disclosure.

Referring to FIGS. 1 to 4 and 6, the printed circuit board 130 may be tightly adhered to the first reinforcing plate 140 and the second reinforcing plate 150.

The printed circuit board 130 according to the present embodiment may be disposed to be tightly adhered to the first reinforcing plate 140 and the second reinforcing plate 150. This tightly adhered structure may enable the printed circuit board 130 to be not deformed by external forces, and in particular, can prevent defects that may occur at electrical connection portions. The printed circuit board 130 is supported vertically by the first reinforcing plate 140 and the second reinforcing plate 150, and can be maintained in a state of being tightly adhered to the first reinforcing plate 140 and the second reinforcing plate 150. The tightly adhered printed circuit board 130 may maintain structural stability despite an external impact. An adhesive may be provided between the first reinforcing plate 140, the second reinforcing plate 150, and the printed circuit board 130, and the first reinforcing plate 140, the second reinforcing plate 150, and the printed circuit board 130 may be coupled by means of a mechanical fastener.

Referring again to FIGS. 1 to 4 and 6, the printed circuit board 130 may not be bent, except for a region between the first reinforcing plate 140 and the second reinforcing plate 150.

Specifically, bending may be permitted only in a specific region between the first reinforcing plate 140 and the second reinforcing plate 150, as needed, and the printed circuit board 130 can maintain the flat state in other regions. As a result, the main circuits and electrical connection portions of the printed circuit board 130 can be maintain flatness without bending. This is, the printed circuit board 130 may prevent electrical contact failures caused by mechanical stress or deformation. By maintaining the printed circuit board 130 in the flat state, electrical signal transmission may be accurately achieved even when coupled to the busbar 120, which may contribute to improving the battery cell voltage sensing accuracy. Further, quality issues such as cracks, tears, or electrical contact failure that may occur in the printed circuit board 130 can be reduced. Further, by eliminating unnecessary bending processes, the production process can be simplified and the production costs can be reduced.

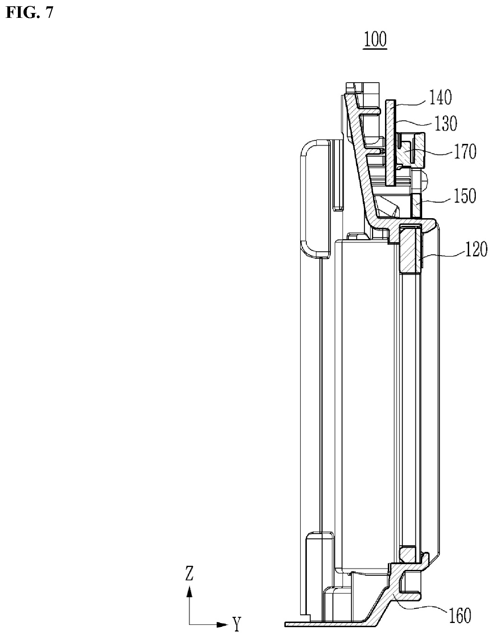

FIG. 7 is a cross-sectional view showing a cross section taken along the cutting line C-C' of FIG. 2.

Referring to FIGS. 1 to 3 and 7, a region connected to the module connector 170 in the printed circuit board 130 may be tightly adhered to the first reinforcing plate 140. The printed circuit board 130 may be connected to the module connector 170. The printed circuit board 130 may transmit voltage data or thermal data of the battery cells to an external BMS via the module connector 170. That is, the module connector 170 according to the present embodiment may perform a function to transmit voltage information of the battery cells, temperature information or the like within the battery assembly to the outside. A portion of the module connector 170 may be exposed to the outside of the battery assembly. Specifically, the portion of the module connector 170 located on the printed circuit board 130 may be physically and tightly fixed to the first reinforcing plate 140. This makes it possible to prevent the module connector 170 from moving or being damaged by any external impact or vibration. Further, the electrical connection between the printed circuit board 130 and the module connector 170 is maintained stably, and the module connector 170 can be protected from physical stress that may occur in any external environment. In addition, the structural stability of the printed circuit board 130 may be improved, thereby reducing the defect rate that may occur during the assembly process and improving the quality of the busbar frame assembly 100.

Referring again to FIGS. 1 to 4, the second reinforcing plate 150 may be disposed closer to the busbar 120 than the first reinforcing plate 140.

The second reinforcing plate 150 according to the present embodiment is disposed closer to the busbar 120 than the first reinforcing plate 140, thereby providing additional support force for the printed circuit board 130. The second reinforcing plate 150 is located on a plane surface different from one surface of the first reinforcing plate 140, thereby performing a function to prevent a specific region of the printed circuit board 130 from bending and maintaining its flatness. Further, it is possible to disperse mechanical stress that may occur when the printed circuit board 130 is connected to the busbar 120 and prevent deformation of the printed circuit board 130. The position of the second reinforcing plate 150 may be designed to stably maintain an electrical contact between the printed circuit board 130 and the busbar 120 and prevent deformation of the printed circuit board 130 that may occur during the assembly process.

Referring again to FIGS. 1 to 4, the first reinforcing plate 140 and the second reinforcing plate 150 may be disposed on one surface of the busbar frame 160.

The first reinforcing plate 140 and the second reinforcing plate 150 according to the present embodiment help to stably fix the printed circuit board 130 to the busbar frame 160, and simultaneously may improve the mechanical rigidity of the printed circuit board 130. Further, they can prevent deformation of the printed circuit board 130 that may occur during the assembly process. The first reinforcing plate 140 and the second reinforcing plate 150 may be disposed in parallel to one surface of the busbar frame 160.

Further, the first reinforcing plate 140, the second reinforcing plate 150, and the printed circuit board 130 may be fixed to the busbar frame 160 by the thermal fusion. According to the present embodiment, the bonding strength between the printed circuit board 130, the first reinforcing plate 140, the second reinforcing plate 150, and the busbar frame 160 may be significantly increased by the thermal fusion. This not only simplifies the assembly process, but also minimizes mechanical defects that may occur after assembly. Further, it is possible to provide a strength that allows the bonding structure to withstand an external impact. The temperature during the thermal fusion process may be optimized taking into consideration the material of the printed circuit board 130 and the physical properties of the first reinforcing plate 140 and the second reinforcing plate 150, which may maintain strong bonds between the first plate 140, the second reinforcing plate 150, the printed circuit board 130, and the busbar frame 160. Further, the first reinforcing plate 140, the second reinforcing plate 150, and the printed circuit board 130 may be precisely bonded to the busbar frame 160, and may prevent the bond from being broken due to external impact or stress.

According to another embodiment of the present disclosure, a battery assembly including a busbar frame assembly 100 is provided.

One or more busbar frame assemblies 100 according to the above-described embodiment may be mounted together with a BDU (Battery Disconnect Unit) module for controlling the electrical connection of battery cells and a BMS (Battery Management System) module for monitoring and controlling the operation of the battery cells to form a battery assembly. The busbar frame assembly 100 may electrically connect at least one of: between the battery cells constituting the battery assembly, between the battery cells and the BDU module, between the battery cells and the BMS module, or between the BDU module and the BMS module.

The busbar frame assembly 100 or the battery assembly can be applied to various devices. Such a device can be applied to a vehicle means such as an electric bicycle, an electric vehicle, or a hybrid vehicle, or ESS (Energy Storage System), but the present disclosure is not limited thereto, and is applicable to various devices capable of using a secondary battery.

In the embodiments above, expressions indicating directions such as "front," "rear," "left," "right," "up," and "down" have been used, but these expressions are used only to facilitate the description, and may vary, for example, depending on the location of a target object or an observer.

Although preferred embodiments of the present disclosure have been shown and described above, the scope of the present disclosure is not limited thereto, and numerous other variations and modifications can be made to the embodiments by those skilled in the art using the basic principles of the invention defined in the appended claims, which also falls within the spirit and scope of the invention.

### [Description of Reference Numerals]

100: busbar frame assembly
120: busbar
130: printed circuit board
140: first reinforcing plate
150: second reinforcing plate
160: busbar frame
170: module connector

## Claims

1. A busbar frame assembly comprising:
a busbar connected to a plurality of battery cells;
a printed circuit board (PCB) connected to the busbar for voltage sensing of the battery cells;
a first reinforcing plate and a second reinforcing plate that are disposed in mutually different regions of the printed circuit board; and
a busbar frame on which the busbar is disposed.

2. The busbar frame assembly according to claim 1,
wherein the second reinforcing plate is separated from the first reinforcing plate, and located on a plane surface different from one surface of the first reinforcing plate.

3. The busbar frame assembly according to claim 1,
wherein the second reinforcing plate is located on a place surface equal to one surface of the busbar.

4. The busbar frame assembly according to claim 1,
wherein the printed circuit board is tightly adhered to the first reinforcing plate and the second reinforcing plate.

5. The busbar frame assembly according to claim 1,
wherein the printed circuit board is not bent, except for a region between the first reinforcing plate and the second reinforcing plate.

6. The busbar frame assembly according to claim 1,
wherein a region connected to a module connector in the printed circuit board is tightly adhered to the first reinforcing plate.

7. The busbar frame assembly according to claim 1,
wherein the second reinforcing plate is disposed closer to the busbar than the first reinforcing plate.

8. The busbar frame assembly according to claim 1,
wherein the first reinforcing plate and the second reinforcing plate are disposed on one surface of the busbar frame.

9. The busbar frame assembly according to claim 1,
wherein the first reinforcing plate, the second reinforcing plate, and the printed circuit board are fixed to the busbar frame by thermal fusion.

10. A battery assembly comprising the busbar frame assembly according to claim 1.
